# EUROPÄISCHE PATENTSCHRIFT

(11) **EP 4 368 433 B1**
(45) Veröffentlichungstag und Bekanntmachung des Hinweises auf die Patenterteilung: **19.02.2025**
(21) Anmeldenummer: 23196125.1
(22) Anmeldetag: 08.09.2023
(51) Int. Cl.: B60K 11/02, B60K 1/00, B60K 25/00

(54) **KÜHLMITTELKREISLAUF FÜR EINE SELBSTFAHRENDE ARBEITSMASCHINE MIT MEHREREN ELEKTRISCHEN ANTRIEBSKOMPONENTEN**
COOLANT CIRCUIT FOR A SELF-PROPELLED WORKING MACHINE WITH A PLURALITY OF ELECTRIC PROPULSION COMPONENTS
CIRCUIT DE FLUIDE DE REFROIDISSEMENT POUR ENGIN DE TRAVAIL AUTOPROPULSÉ COMPRENANT PLUSIEURS COMPOSANTS DE PROPULSION ÉLECTRIQUE

(30) Priorität: 21.10.2022 DE 102022127839
(43) Veröffentlichungstag der Anmeldung: 15.05.2024
(73) Patentinhaber: Manitowoc Crane Group France SAS, 69574 Dardilly Cedex (FR)
(72) Erfinder: KRUG, Andreas, 26125 Oldenburg (DE); BENTON, John F., 26382 Wilhelmhaven (DE)
(74) Vertreter: SSM Sandmair

(56) Entgegenhaltungen:
- EP-B1- 3 377 354
- WO-A1-2016/006174
- DE-A1- 102015 007 235
- DE-A1- 102020 102 885
- DE-A1- 102021 200 734
- US-A1- 2011 000 241
- US-A1- 2021 088 124
- US-A1- 2022 145 587

## Beschreibung

Die folgende Erfindung betrifft einen Kühlmittelkreislauf, mittels welchem die von elektrischen Antriebskomponenten einer selbstfahrenden Antriebsmaschine insbesondere eines Mobilkrans, erzeugte thermische Leistung abgeführt wird und die elektrischen Antriebskomponenten somit gekühlt werden. Die vorliegende Erfindung betrifft ferner eine selbstfahrende Arbeitsmaschine, insbesondere einen Mobilkran mit einem oder mehreren solcher Kühlmittelkreisläufe.

Bei bekannten Arbeitsmaschinen einschließlich Mobilkranen ist es üblich, die einzelnen (Kran-)Funktionen mittels sogenannter hydraulischer Antriebe zu betreiben, bei welchen ein oder mehrere beispielsweise über mechanische (Wellen-)Leistung versorgte Hydraulikpumpen fluidisch mit Hydraulikzylindern oder Hydraulikmotoren der einzelnen (Kran-)Funktionen in Verbindung stehen, um diese letztendlich anzutreiben. Bei hybrid-elektrischen oder vollelektrischen Antriebskonzepten werden diese hydraulischen Antriebe zumindest teilweise durch elektrische Antriebe ergänzt bzw. ersetzt. Elektrische Antriebe umfassen üblicherweise Elektromotoren mit dazugehörigen Invertern zur Leistungs- und Positionssteuerung. Die benötigte elektrische Leistung wird durch einen Generator bereitgestellt, welcher etwa durch einen Verbrennungsmotor im Unterwagen der Arbeitsmaschine angetrieben wird, oder aber durch eine Einspeisung externer elektrischer Leistung. Ebenso kann ein maschineneigener Energiespeicher zur Leistungsversorgung bereitgestellt werden, wobei auch eine Kombination der genannten Versorgungsmöglichkeiten denkbar ist. Durch Abbremsen einzelner Antriebe wird wiederum Energie frei, welche zum Laden des Energiespeichers verwendet werden kann. Sollte der Energiespeicher voll geladen sein, muss diese Leistung oftmals über einen elektrischen Widerstand, einen sogenannten Bremschopper abgebaut werden, wodurch Wärmeenergie frei wird. Energiespeicher bzw. Akkumulatoren, Elektromotoren und dazugehörige Inverter samt ihrer Leistungselektronik und Steuerung stellen hohe Ansprüche an die Einhaltung zulässiger Betriebstemperaturen. Bei Über- oder Unterschreiten sogenannter Grenzbetriebstemperaturen werden die betreffenden Komponenten zum Schutz des Systems in ihrer Leistung reduziert. Zur Vermeidung dieser für den Maschinenbetrieb nachteiligen Leistungsreduktionen werden solche elektrischen Antriebskomponenten mittels oftmals aufwendiger Mechanismen gekühlt. Flüssigkeitskühlungen, also Kühlsysteme mit flüssigem Kühlmedium (zumeist Wasser-Glykolmischungen) sind hierfür weit verbreitet. Der Einfachheit halber wird im Folgenden auf einen Mobilkran als spezielle Ausführungsform einer selbstfahrenden Arbeitsmaschine Bezug genommen. Die im Folgenden beschriebenen Konzepte sind selbstverständlich auf jedwede Art von selbstfahrenden Arbeitsmaschinen anwendbar und daher nicht auf einen Mobilkran beschränkt.

Die üblicherweise bei Kranen vorzufindenden Antriebskomponenten der einzelnen Kranfunktionen umfassen Hydraulikpumpen, welche ihnen zugeordnete Hydraulikmotoren oder Hydraulikzylinder antreiben, um beispielsweise Wippwerke, Hubwerke, Teleskopierwerke und Drehwerke zu betätigen.

Ein Kühlmittelkreislauf für ein Elektro- oder Hybrid-Fahrzeug ist aus der US 2011/000241 A1 bekannt.

Es ist die Aufgabe der vorliegenden Erfindung, ein Kühlsystem bereitzustellen, welches bei vollelektrischen oder hybrid-elektrischen Antriebskonzepten dem Kühlleistungsbedarf unterschiedlicher elektrischer Antriebskomponenten auf effiziente Weise gerecht wird. Die vorliegende Erfindung hat erkannt, dass im Mobilkranbetrieb üblicherweise nicht alle Antriebe gleichzeitig bei hoher Auslastung und damit einhergehendem Kühlleistungsbedarf betrieben werden. Eine intelligente Auslegung des Kühlsystems bietet somit erhebliches Einsparungspotential.

Diese Aufgabe wird durch einen Kühlmittelkreislauf mit den Merkmalen des unabhängigen Patentanspruchs 1 und durch eine selbstfahrende Arbeitsmaschine gemäß Patentanspruch 8 gelöst.

Gemäß der vorliegenden Erfindung wird ein Kühlmittelkreislauf für eine selbstfahrende Arbeitsmaschine mit mehreren elektrischen Antriebskomponenten vorgeschlagen, wobei der Kühlmittelkreislauf folgendes umfasst:
- eine Kühlmittelpumpe zur Erzeugung eines im Kühlmittelkreislauf umlaufenden Stroms an Kühlmittel;
- einen Wärmetauscher zur Abführung von im Kühlmittel gespeicherter Wärmeenergie;
- zumindest zwei parallel zueinander verlaufende Kreislaufstränge, welche dazu ausgestaltet sind, das Kühlmittel zur Aufnahme von Wärmeenergie an den ihnen jeweils zugeordneten Antriebskomponenten vorbeizuführen.

Mit anderen Worten umfasst der erfindungsgemäße Kühlmittelkreislauf in zumindest einem Teilbereich mehrere parallel zueinander verlaufende Stränge für die Kühlung der ihnen jeweils zugeordneten Antriebskomponenten. Diese Stränge können hierbei über einen gemeinsamen Vorlauf gespeist werden und wieder in einen gemeinsamen Rücklauf münden. Die Kühlmittelpumpe kann ferner im Vorlauf angeordnet sein, wobei der Wärmetauscher/Kühler im Rücklauf angeordnet sein kann.

Durch das Bereitstellen von zumindest zwei parallel zueinander angeordneter Kreislaufsträngen ist es gemäß der vorliegenden Erfindung möglich, die einzelnen Antriebskomponenten entsprechend ihrem Kühlleistungsbedarf auf die bereitgestellten Stränge aufzuteilen. Hier ist es möglich, die einzelnen Antriebskomponenten entsprechend ihres Wärmeeintrags so auf die zur Verfügung stehenden Kreislaufstränge aufzuteilen, dass ein möglichst gleichmäßiger Wärmeeintrag über den Kühlmittelkreislauf hinweg stattfindet. Lokal übermäßiger Eintrag thermischer Leistung wird somit vermieden.

In einer Ausführungsform können die Kreislaufstränge über ihre Erstreckung hinweg einen im Wesentlichen gleichen Druckverlust im Kühlmittelstrom verursachen, wobei zumindest einer der Kreislaufstränge ein Drosselelement aufweist, mittels welchem der Druckverlust des betreffenden Kreislaufstrangs an den Druckverlust des zumindest einen weiteren Kreislaufstrangs angeglichen wird.

Anders ausgedrückt wird in jedem Kreislaufstrang ein im Wesentlichen gleicher Gegendruck erzeugt. Dies wird durch eine gezielte Auswahl der in den jeweiligen Kreislaufsträngen angeordneten Antriebskomponenten ermöglicht. Hierdurch kann erreicht werden, dass die durch die jeweiligen Kreislaufstränge hindurchgeführten Kühlmittel-Volumenströme über den Kranbetrieb hinweg in einem festen Verhältnis stehen, untereinander jedoch durchaus unterschiedliche Beträge aufweisen können. Sollte es selbst durch eine geschickte Kombination und Anordnung der für den jeweiligen Kran vorzusehenden Antriebskomponenten nicht möglich sein, ausreichend ähnliche Gegendrücke bzw. Druckverluste in den einzelnen Kreislaufsträngen zu erzeugen, können in einzelnen Kreislaufsträngen Drosselelemente wie etwa Drosseln, Blenden oder Drosselventile dazu dienen, über die Kreislaufstränge hinweg zufriedenstellend gleiche Druckverluste bzw. Gegendrücke zu erzeugen.

Gemäß einem weiteren Beispiel können die Antriebskomponenten in zumindest einem der Kreislaufstränge entsprechend der Höhe ihrer jeweiligen Grenzbetriebstemperatur und in Strömungsrichtung des Kühlmittels beginnend mit der niedrigsten Grenzbetriebstemperatur angeordnet sein.

Anders gewendet wird eine weitere Effizienzsteigerung dadurch erreicht, indem man in zumindest einem der Kreislaufstränge den Kühlmittelstrom zunächst an den Antriebskomponenten vorbeileitet, deren Grenzbetriebstemperatur am geringsten ist, bei welchem also eine notwendige Leistungsreduktion aufgrund zu hoher Betriebstemperatur zuerst zu befürchten ist. Bei mehr als drei Antriebskomponenten in einem Kreislaufstrang kann deren Anordnung also wie folgt aussehen: Zunächst erreicht das durch den Kreislaufstrang geführte Kühlmittel die Antriebskomponente mit der geringsten Grenzbetriebstemperatur, daraufhin die Antriebskomponente mit einer Grenzbetriebstemperatur mittlerer Höhe und zuletzt die Antriebskomponente mit der höchsten Grenzbetriebstemperatur. Durch diese Anordnung der Antriebskomponente kann der zur Verfügung stehende Kühlmittelstrom in effizienter Weise genutzt und folglich der Kühlmittelkreislauf, einschließlich der Kühlmittelpumpe und der Verrohrung geringer dimensioniert werden.

Des Weiteren können die Antriebskomponenten innerhalb eines Kreislaufstrangs entsprechend ihrer Wärmeverlustleistung und/oder ihrer Sicherheitsrelevanz angeordnet sein. Konkret könnte dies bedeuten, dass die sicherheitsrelevanteste Komponente zuerst vom Kühlmittel passiert werden, gefolgt von weniger sicherheitsrelevanten Komponenten. Auch könnten zunächst Komponenten geteilt werden, welche die geringste Wärmeverlustleistung aufweisen, gefolgt von Komponenten mit höherer Wärmeverlustleistung. Es ist auch denkbar, dass die Anordnung der Komponenten innerhalb eines Kreislaufstrangs auf Basis von zumindest zwei der Kriterien Grenzbetriebstemperatur, Wärmeverlustleistung und Sicherheitsrelevanz erfolgt.

Die Kreislaufstränge können in Strömungsrichtung des Kühlmittels gesehen zwischen der Kühlmittelpumpe und dem Wärmetauscher angeordnet sein. Die Kühlmittelpumpe kann beispielsweise im die einzelnen Kreislaufstränge vorgeschalteten Vorlauf und der Wärmetauscher bzw. Kühler im den einzelnen Kreislaufsträngen nachgeschalteten Rücklauf. Selbstverständlich wäre auch eine Anordnung des Wärmetauschers im Vorlauf und/oder eine Anordnung der Kühlmittelpumpe im Rücklauf vorstellbar.

Gemäß der vorliegenden Erfindung weist der Kühlmittelkreislauf zumindest einen zumindest zwei der Kreislaufstränge fluidisch verbindenden Verbindungsstrang auf, mit zumindest einem Ventil zum Öffnen bzw. Schließen des Verbindungsstrangs und/oder zur Variation des Volumenstroms des durch den Verbindungsstrang geführten Kühlmittels. Durch einen solchen Verbindungsstrang ist es möglich, Kühlmittel aus einem Kreislaufstrang in einen anderen parallel dazu verlaufenden Kreislaufstrang zu überführen, um Antriebskomponenten Kühlmittel geringerer oder höherer Temperatur zuzuführen, als dies über den "eigenen" Kreislaufstrang möglich wäre. Eine solche "Querversorgung" kann wahlweise immer dann bereitgestellt werden, wenn eine zu niedrige oder zu hohe Betriebstemperatur der zu kühlenden Antriebskomponente(n) festgestellt oder gegebenenfalls erwartet wird. Das Öffnen und auch Schließen des Verbindungsstrangs kann durch ein oder mehrere wahlweise schaltbare Ventile bewerkstelligt werden. Es ist ferner vorstellbar, dass dem spendenden Kreislaufstrang der gesamte oder auch nur ein Teil des Kühlmittelstroms entnommen wird. Auch ist es vorstellbar, dass im empfangenden Kreislaufstrang die eigentliche Kühlmittelzuführung über den Vorlauf gänzlich oder auch nur teilweise geschlossen wird.

In einer Ausführungsform verbindet der Verbindungsstrang in Strömungsrichtung des Kühlmittels einen ersten Kreislaufstrang nach zumindest einer Antriebskomponente im ersten Kreislaufstrang mit einem zweiten Kreislaufstrang vor zumindest einer Antriebskomponente im zweiten Kreislaufstrang. Bei einer solchen Anordnung ist es möglich, die Abwärme einzelner Antriebskomponenten, welche im ersten Kreislaufstrang auf das Kühlmittel übertragen wurde, für die Erwärmung ein oder mehrerer Antriebskomponenten im zweiten Kreislaufstrang zu nutzen. Diese ist insbesondere dann von Nutzen, wenn Antriebskomponenten für den Kranbetrieb zunächst auf Betriebstemperatur gebracht werden müssen, um Leistungsreduktionen zu vermeiden. Insbesondere ist dies im Zusammenhang mit Batteriespeichern bzw. Akkumulatoren vorstellbar. Als Wärmequelle können dabei sämtliche vorstellbaren, ohnehin für die Kranfunktionen vorhandene Antriebskomponenten dienen, allerdings ist es ebenso möglich Heizeinrichtungen, insbesondere elektrisch betriebene Heizeinrichtungen vorzusehen.

Zwar ist es für die Funktion des zumindest einen Verbindungsstrangs vorstellbar, dass das zumindest eine Ventil manuell, beispielsweise durch Kranpersonal betätigt wird, allerdings kann das zumindest eine Ventil ansteuerbar ausgestaltet sein, insbesondere mittels einer Steuereinrichtung, um automatisch und entsprechend dem Kühlmittelbedarf einer über den Verbindungsstrang (21) mit Kühlmittel versorgten Antriebskomponente (8-19) einen Volumenstrom an Kühlmittel über den Verbindungsstrang (21) zu führen.

In weiterer Ausgestaltung kann die Steuereinrichtung zumindest einen die Temperatur einer Antriebskomponente erfassenden Sensor aufweisen und bei Unterschreiten oder Überschreiten einer für die Antriebskomponente vordefinierten Temperaturschwelle wahlweise ein Öffnen oder Schließen des zumindest einen Ventils veranlassen.

Sollte also festgestellt werden, dass eine Erwärmung einer Antriebskomponente für den Betrieb notwendig oder auch nur vorteilhaft ist, kann mittels der vorzugsweise elektronischen Steuereinrichtung der Verbindungsstrang geöffnet werden, um die Abwärme einer Antriebskomponente für die Erwärmung einer weiteren Antriebskomponente zu nutzen. Sollte die notwendige Betriebstemperatur erreicht sein, kann die Steuereinrichtung wieder ein Schließen des Verbindungsstrangs veranlassen. Im Falle eines zusätzlichen Kühlbedarfs von Antriebskomponenten, der über den Verbindungsstrang gedeckt werden kann, gilt analoges.

Ein weiterer Aspekt der vorliegenden Erfindung betrifft eine selbstfahrende Arbeitsmaschine, insbesondere einen Mobilkran, mit mehreren elektrischen Antriebskomponenten und einen Kühlmittelkreislauf gemäß einer der oben beschriebenen Ausführungsformen.

In einer weiteren Ausgestaltung kann die selbstfahrende Arbeitsmaschine, insbesondere der Mobilkran mehrere solcher Kühlmittelkreisläufe aufweisen, welche eine untereinander gleiche, ähnliche oder andere Ausgestaltung aufweisen können. Für eine Arbeitsmaschine bzw. Kran mit einem Unterwagen und einem darauf drehbar angeordneten Oberwagen wäre es zunächst vorstellbar, einen einzigen Kühlmittelkreislauf vorzusehen, der sich beispielsweise durch die Drehdurchführung zwischen Ober- und Unterwagen hindurch erstreckt. Andererseits ist es vorstellbar, dass für den Unterwagen und für den Oberwagen jeweils eigene, voneinander unabhängige Kühlmittelkreisläufe vorgesehen sind.

Die vorliegende Erfindung wird im Folgenden anhand bevorzugter Ausführungsformen und unter Bezugnahme auf die beiliegenden Figuren näher erläutert. Die Erfindung kann sämtliche hierin beschriebenen Merkmale einzeln sowie in jedweder sinnvollen Kombination umfassen.

Es zeigen:
Figur 1: einen Kühlmittelkreislauf gemäß der vorliegenden Erfindung für einen Kranunterwagen;
Figur 2: einen beispielhaften, nicht erfindungsgemäß ausgebildeten Kühlmittelkreislauf für einen Kranoberwagen.

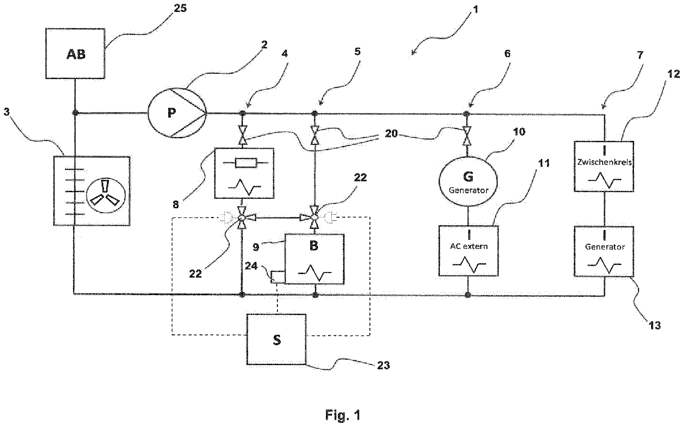

In der Figur 1 ist ein Kühlmittelkreislauf 1 für einen Kranunterwagen zu sehen, welcher neben einem die Kühlmittelpumpe 2 umfassenden Vorlauf und einem den Wärmetauscher 3 umfassenden Rücklauf vier parallel zueinander verlaufende Kreislaufstränge 4 bis 7 aufweist, welche sich zwischen dem Vorlauf und dem Rücklauf erstrecken. Das von der Pumpe 2 geförderte Kühlmittel wird sämtlichen Kreislaufsträngen 4 bis 7 zugeführt, um die in den jeweiligen Kreislaufsträngen 4 bis 7 angeordneten elektrischen Antriebskomponenten 8 bis 13 zu kühlen, mit anderen Worten deren Abwärme abzuführen. Das erwärmte Kühlmittel wird über einen gemeinsamen Rücklauf dem Wärmetauscher 3 zugeführt, in welchem dem Kühlmittel die gespeicherte thermische Energie wieder entzogen wird. Ein in Strömungsrichtung des Kühlmittels zwischen dem Wärmetauscher 3 und der Pumpe 2 angeordneter Ausgleichsbehälter 25 dient der Kompensation thermisch bedingter Volumenänderungen des Kühlmittels.

Im in der Figur 1 gezeigten Beispiel weisen sämtliche Kreislaufstränge 4 bis 7 einen annähernd gleichen Druckverlust auf bzw. erzeugen einen annähernd gleichen Gegendruck. Somit wird erreicht, dass die durch die jeweiligen Kreislaufstränge 4 bis 7 geführten Kühlmittel-Volumenströme in einem festen Größenverhältnis stehen, ohne dass es zu einer Über- oder Unterversorgung einzelner Kreislaufstränge 4 bis 7 kommt. Da der Kreislaufstrang 7 mit dem Inverter 12 für einen Zwischenkreis der elektrischen Energieversorgung und dem Inverter 13 des Generators 10 den größten Druckverlust aufweist, werden die übrigen Kreislaufstränge 4 bis 6, deren zugordnete Antriebskomponenten 8 bis 11 einen geringeren Druckverlust verursachen, mit Drosselventilen 20 versehen, sodass sämtliche Kreislaufstränge 4 bis 7 einen annähernd gleichen Druckverlust aufweisen bzw. einen annähernd gleichen Gegendruck erzeugen.

Innerhalb der einzelnen Kreislaufstränge 4 bis 7 sind die Antriebskomponenten 8 bis 13 so angeordnet, dass der Kühlmittelstrom zunächst die Antriebskomponenten mit der geringsten Grenzbetriebstemperatur passiert, und erst dann die ihnen nachfolgenden Antriebskomponenten einer höheren Grenzbetriebstemperatur.

Der in der Figur 1 zu sehende Kühlmittelkreislauf 1 weist ferner eine elektronische Steuereinrichtung 23 auf, welche signaltechnisch mit zwei Ventilen 22 und einem Temperatursensor 24 in Verbindung steht und entsprechend einem vom Sensor 24 übermittelten Temperaturwert ein Öffnen bzw. Schließen der Ventile 22 veranlasst. Im gezeigten Beispiel bedeutet dies konkret, dass, sollte vom Sensor 24 eine zu geringe Temperatur des Akkumulators bzw. Batteriespeichers 9 erfasst werden, die Steuereinrichtung 23 ein Öffnen des Verbindungsstrangs veranlasst, sodass die vom Bremschopper 8 an das Kühlmittel abgegebene Abwärme über den Verbindungsstrang dem Batteriespeicher 9 zugeführt wird, um diesen auf Betriebstemperatur zu bringen. In diesem Zustand der Ventile 22 besteht keine direkte Verbindung zwischen dem Kreislaufstrang 4 und dem Rücklauf, und auch keine direkte Verbindung zwischen dem Kreislaufstrang 5 und dem Vorlauf. Sämtliches am Bremschopper 8 vorbeigeführtes Kühlmittel wird folglich auch am Batteriespeicher 9 vorbeigeführt.

Der Bremschopper 8 wandelt überflüssige Energie, welche beispielsweise aus Rekuperation durch Bremsen eines Antriebes anfällt und aufgrund eines ausreichend hohen Ladezustandes des Batteriespeichers 9 nicht zum Laden des Batteriespeichers 9 dienen kann, über einen elektrischen Widerstand in Wärmeenergie um, die vom passierenden Kühlmittel aufgenommen wird.

Da nicht zu erwarten ist, dass sowohl vom Generator 10 als auch vom Inverter der externen Leistungsversorgung 11 gleichzeitig hohe Wärmeleistung abgeführt werden muss, können diese Komponenten im selben Strang 6 angeordnet sein.

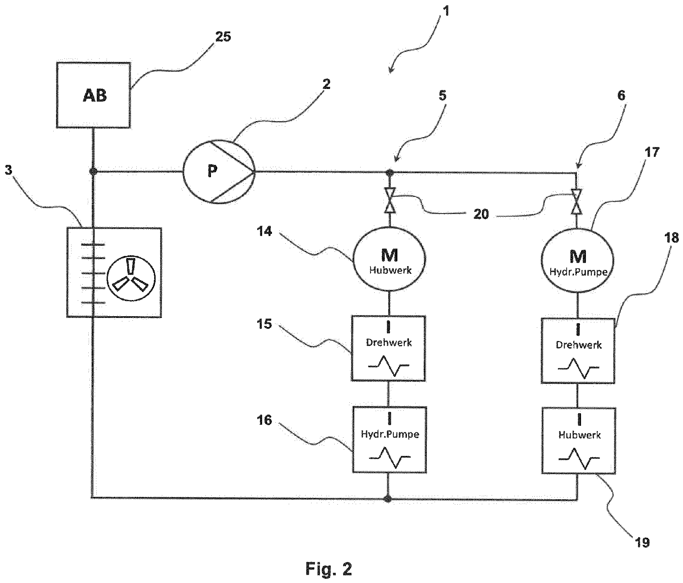

In der Figur 2 ist ein Kühlmittelkreislauf 1 für einen Kranoberwagen zu sehen, welcher in seinen wesentlichen Bestandteilen mit dem in der Figur 1 gezeigten Kühlmittelkreislauf 1 identisch ist. Der für den Kranoberwagen vorgesehene Kühlmittelkreislauf 1 weist allerdings nur zwei parallele Kreislaufstränge 5 und 6 auf, welche jeweils drei Antriebskomponenten 14 bis 19 mit Kühlmittel versorgen. Dies sind im Strang 5, geordnet nach zunehmender zulässiger Grenzbetriebstemperatur der Elektromotor 14 des Hubwerks, der Inverter 15 eines ersten luftgekühlten Drehwerkmotors und der Inverter 16 für die Hydraulikpumpe 17. Im Strang 6 sind dies der wassergekühlte Elektromotor für die Hydraulikpumpe, welche beispielsweise das Wippwerk und das Teleskopierwerk mit hydraulischer Flüssigkeit versorgt, ein weiterer Inverter 18 für einen zweiten luftgekühlten Drehwerksmotor und der Inverter 19 für den wassergekühlten Hubwerksmotor 14. Da beim zugrundeliegenden Mobilkran nicht davon auszugehend ist, dass das Hubwerk dauerhaft zusammen mit dem Wipp- oder Teleskopierwerk betrieben wird und deren Antriebskomponenten somit gleichzeitig hohe Abwärme erzeugen, werden deren entsprechende Antriebskomponenten 14, 16, 17 und 19 über dieselben Kreislaufstränge 5 und 6 mit Kühlmittel versorgt. Um lokale "Wärmespitzen" zu vermeiden, werden die Einzelkomponenten 14, 16, 17 und 19 des Hubwerks und der hydraulischen Pumpe "über Kreuz" auf die Kreislaufstränge 5 und 6 verteilt.

## Patentansprüche

1. Kühlmittelkreislauf für eine selbstfahrende Arbeitsmaschine mit mehreren elektrischen Antriebskomponenten (8-19), mit:
- einer Kühlmittelpumpe (2) zur Erzeugung eines im Kühlmittelkreislauf (1) umlaufenden Stroms an Kühlmittel;
- einem Wärmetauscher (3) zur Abführung von im Kühlmittel gespeicherter Wärmeenergie; und
- zumindest zwei parallel zueinander verlaufenden Kreislaufsträngen (4-7), welche dazu ausgestaltet sind, das Kühlmittel zur Aufnahme von Wärmeenergie an den ihnen jeweils zugeordneten Antriebskomponenten (8-19) vorbeizuführen; **gekennzeichnet durch**
- zumindest einen zumindest zwei der Kreislaufstränge (4-7) fluidisch verbindenden und zur Überführung von Kühlmittel aus einem ersten Kreislaufstrang (4-7) in einen zweiten Kreislaufstrang (4-7) ausgestalteten Verbindungsstrang mit zumindest einem Ventil (22) zum Öffnen bzw. Schließen des Verbindungsstrangs und/oder zur Variation des Volumenstroms des durch den Verbindungsstrang geführten Kühlmittels.

2. Kühlmittelkreislauf nach Anspruch 1, wobei die Kreislaufstränge (4-7) über ihre Erstreckung hinweg einen im Wesentlichen gleichen Druckverlust im Kühlmittelstrom verursachen und zumindest einer der Kreislaufstränge (4-7) ein Drosselelement (20) aufweist, welches ausgestaltet ist, den Druckverlust des betreffenden Kreislaufstrangs (4-7) an den Druckverlust des zumindest einen weiteren Kreislaufstrangs (4-7) anzugleichen.

3. Kühlmittelkreislauf nach einem der Ansprüche 1 und 2, wobei die Antriebskomponenten (8-19) in zumindest einem der Kreislaufstränge (4-7) entsprechend der Höhe ihrer jeweiligen
- Grenzbetriebstemperatur;
- Wärmeverlustleistung; und/oder
- Sicherheitsrelevanz; und in Strömungsrichtung des Kühlmittels beginnend mit der
- niedrigsten Grenzbetriebstemperatur;
- geringsten Wärmeverlustleistung; und/oder
- höchsten Sicherheitsrelevanz;
angeordnet sind.

4. Kühlmittelkreislauf nach einem der Ansprüche 1 bis 3, wobei die Kreislaufstränge (4-7) in Strömungsrichtung des Kühlmittels zwischen der Kühlmittelpumpe (2) und dem Wärmetauscher (3) angeordnet sind.

5. Kühlmittelkreislauf nach einem der Ansprüche 1 bis 4, wobei der
Verbindungsstrang in Strömungsrichtung des Kühlmittels einen ersten Kreislaufstrang (4-7) nach zumindest einer Antriebskomponente (8-19) im ersten Kreislaufstrang (4-7) mit einem zweiten Kreislaufstrang (4-7) vor zumindest einer Antriebskomponente (8-19) im zweiten Kreislaufstrang (4-7) verbindet.

6. Kühlmittelkreislauf nach einem der Ansprüche 1 bis 5, wobei das zumindest eine Ventil (22) ansteuerbar ausgestaltet ist, insbesondere mittels einer Steuereinrichtung (23), um entsprechend dem Kühlmittelbedarf einer über den Verbindungsstrang mit Kühlmittel versorgten Antriebskomponente (8-19) einen Volumenstrom an Kühlmittel über den Verbindungsstrang zu führen.

7. Kühlmittelkreislauf nach Anspruch 6, wobei die Steuereinrichtung (23) zumindest einen die Temperatur einer Antriebskomponente (8-19) erfassenden Sensor (24) aufweist und bei Unterschreiten oder Überschreiten einer für die Antriebskomponente (8-19) vordefinierten Temperaturschwelle wahlweise ein Öffnen oder Schließen des zumindest einen Ventils (22) veranlasst.

8. Selbstfahrende Arbeitsmaschine, insbesondere Mobilkran, mit mehreren elektrischen Antriebskomponenten (8-19) und einem Kühlmittelkreislauf (1) gemäß einem der Ansprüche 1 bis 7.

9. Selbstfahrende Arbeitsmaschine nach Anspruch 8, mit mehreren unabhängig voneinander nach einem der Ansprüche 1 bis 7 ausgestalteten Kühlmittelkreisläufen (1), insbesondere wobei ein erster Kühlmittelkreislauf (1) dem Unterwagen der Arbeitsmaschine mit mehreren Antriebskomponenten (8-19) und ein zweiter Kühlmittelkreislauf (1) dem Oberwagen der Arbeitsmaschine mit mehreren Antriebskomponenten (8-19) zugeordnet ist.

## Claims

1. Coolant circuit for a self-propelled work machine comprising multiple electric drive components (8-19), comprising:
- a coolant pump (2) for generating a stream of coolant which circulates in the coolant circuit (1);
- a heat exchanger (3) for dissipating thermal energy stored in the coolant; and
- at least two circuit lines (4-7) which extend parallel to one another and are designed to guide the coolant past the drive components (8-19) respectively assigned to them, in order to absorb thermal energy;
**characterised by**
- at least one connecting line which fluidically connects at least two of the circuit lines (4-7), is designed to transfer coolant from a first circuit line (4-7) into a second circuit line (4-7) and has at least one valve (22) for opening or closing the connecting line and/or for varying the volume flow of the coolant guided through the connecting line.

2. Coolant circuit according to claim 1, wherein the circuit lines (4-7) cause a substantially equal pressure loss in the coolant stream across their extent and at least one of the circuit lines (4-7) has a throttle element (20) which is designed to match the pressure loss of the affected circuit line (4-7) to the pressure loss of the at least one further circuit line (4-7).

3. Coolant circuit according to either of claims 1 and 2, wherein the drive components (8-19) are arranged in at least one of the circuit lines (4-7) in accordance with the magnitude of their respective:
- maximum operating temperature;
- heat dissipation capacity; and/or
- safety relevance; and in the direction of flow of the coolant, starting with the:
- lowest maximum operating temperature;
- smallest heat dissipation capacity; and/or
- greatest safety relevance.

4. Coolant circuit according to one of claims 1 to 3, wherein the circuit lines (4-7) are arranged in the direction of flow of the coolant between the coolant pump (2) and the heat exchanger (3).

5. Coolant circuit according to one of claims 1 to 4, wherein the connecting line connects, in the direction of flow of the coolant, a first circuit line (4-7) downstream of at least one drive component (8-19) in the first circuit line (4-7) to a second circuit line (4-7) upstream of at least one drive component (8-19) in the second circuit line (4-7).

6. Coolant circuit according to one of claims 1 to 5, wherein the at least one valve (22) is designed to be activated, in particular by means of a control device (23), in order to guide a volume flow of coolant via the connecting line in accordance with the coolant requirements of a drive component (8-19) supplied with coolant via the connecting line.

7. Coolant circuit according to claim 6, wherein the control device (23) has at least one sensor (24) that senses the temperature of a drive component (8-19) and initiates either the opening or closing of the at least one valve (22) when a temperature threshold predefined for the drive component (8-19) is exceeded or fallen short of.

8. Self-propelled work machine, in particular mobile crane, comprising multiple electric drive components (8-19) and a coolant circuit (1) according to one of claims 1 to 7.

9. Self-propelled work machine according to claim 8, comprising multiple coolant circuits (1) which are designed independently of each other according to one of claims 1 to 7, in particular wherein a first coolant circuit (1) is assigned to the undercarriage of the work machine comprising multiple drive components (8-19) and a second coolant circuit (1) is assigned to the upper carriage of the work machine comprising multiple drive components (8-19).

## Revendications

1. Circuit de refroidissement pour engin automoteur à plusieurs éléments d'entraînement électriques (8-19), comportant :
- une pompe à liquide de refroidissement (2) pour générer un flux de liquide de refroidissement circulant dans le circuit de liquide de refroidissement (1),
- un échangeur de chaleur (3) pour dissiper l'énergie thermique renfermée par le liquide de refroidissement, et
- au moins deux lignes de circuit (4-7) parallèles l'une à l'autre et conçues pour faire passer le liquide de refroidissement près des composants d'entraînement (8-19) qui leur sont associés afin d'absorber de l'énergie thermique ;
**caractérisé par**
au moins une ligne de raccordement reliant fluidiquement au moins deux des lignes de circuit (4-7) et conçue pour faire passer du liquide de refroidissement d'une première ligne de circuit (4-7) dans une deuxième ligne de circuit (4-7) et comportant au moins une vanne (22) pour ouvrir ou fermer la ligne de raccordement et/ou pour faire varier le flux volumique du liquide de refroidissement guidé par la ligne de raccordement.

2. Circuit de liquide de refroidissement selon la revendication 1, dans lequel les lignes de circuit (4-7) provoquent une perte de pression sensiblement égale dans le flux de liquide de refroidissement sur toute leur étendue, et au moins une des lignes de circuit (4-7) comporte un élément d'étranglement (20) conçu pour faire correspondre la perte de pression de la ligne de circuit (4-7) concernée à la perte de pression d'au moins une autre ligne de circuit (4-7).

3. Circuit de refroidissement selon l'une des revendications 1 et 2, dans lequel les composants d'entraînement (8-19) d'au moins une des lignes de circuit (4-7) sont agencés selon le niveau de
- leur température de service limite,
- leurs performances en matière de déperdition de chaleur, et/ou
- leur pertinence en matière de sécurité ; et
sont agencés, dans le sens de l'écoulement du liquide de refroidissement, en commençant par
- leur température de service limite la plus basse,
- leurs performances en matière de déperdition de chaleur les plus basses, et/ou
- leur pertinence la plus haute en matière de sécurité.

4. Circuit de liquide de refroidissement selon l'une des revendications 1 à 3, dans lequel les lignes de circuit (4-7) sont disposées, dans le sens de l'écoulement du liquide de refroidissement, entre la pompe à liquide de refroidissement (2) et l'échangeur de chaleur (3).

5. Circuit de liquide de refroidissement selon l'une des revendications 1 à 4, dans lequel la ligne de raccordement relie, dans le sens de l'écoulement du liquide de refroidissement, une première ligne de circuit (4-7) en amont d'au moins un composant d'entraînement (8-19) de la première ligne de circuit (4-7) à une deuxième ligne de circuit (4-7) en aval d'au moins un composant d'entraînement (8-19) de la deuxième ligne de circuit (4-7).

6. Circuit de liquide de refroidissement selon l'une des revendications 1 à 5, dans lequel l'au moins une vanne (22) est conçue pour être pilotable, notamment au moyen d'un dispositif de commande (23), pour permettre l'apport d'un flux volumique de liquide de refroidissement par le biais de la ligne de raccordement en fonction du besoin en liquide de refroidissement d'un composant d'entraînement (8-19) alimenté en liquide de refroidissement par la ligne de raccordement.

7. Circuit de refroidissement selon la revendication 6, dans lequel le dispositif de commande (23) comporte au moins un capteur (24) qui détecte la température d'un composant d'entraînement (8-19) et qui, si un seuil de température prédéfini pour le composant d'entraînement (8-19) a été franchi à la baisse ou à la hausse, provoque soit une ouverture, soit une fermeture de l'au moins une vanne (22).

8. Engin automoteur, notamment grue mobile, comportant plusieurs composants d'entraînement électriques (8-19) et un circuit de refroidissement (1) selon l'une des revendications 1 à 7.

9. Engin automoteur selon la revendication 8, comportant plusieurs circuits de liquide de refroidissement (1) conçus indépendamment selon l'une des revendications 1 à 7, et notamment dans lequel un premier circuit de liquide de refroidissement (1) est associé au châssis de l'engin doté de plusieurs composants d'entraînement (8-19) et un deuxième circuit de liquide de refroidissement (1) est associé à la tourelle de l'engin dotée de plusieurs composants d'entraînement (8-19).
